# EUROPEAN PATENT APPLICATION

(11) **EP 4 697 514 A2**
(43) Date of publication of application: **18.02.2026**
(21) Application number: 25186567.1
(22) Date of filing: 01.07.2025
(51) Int. Cl.: H01R 13/00

(54) **HERMETICALLY SEALED SENSING DEVICE**

(30) Priority: 22.07.2024 IN 202411055690
(71) Applicant: Honeywell International Inc., Charlotte, NC 28202 (US)
(72) Inventor: GANGARAJU, Charlotte, 28202 (US); SIGGLINGAPPA, Vijayakumar, Charlotte, 28202 (US); MARENAYAKANAHALLI NARASIMHAMURTHY, Naveen Kumar, Charlotte, 28202 (US)
(74) Representative: Haseltine Lake Kempner LLP

(57) **Abstract**

A hermetically sealed sensing device is provided. The hermetically sealed sensing device may comprise a header defining one or more substantially cylindrical cavities, at least one terminal, and/or a sensing element. In some examples, the hermetically sealed sensing device comprises a silicon rubber stopper configured to provide, along with the at least one terminal, a hermetic seal in the one or more substantially cylindrical cavities. In some examples, the hermetically sealed sensing device comprises threaded grooves along the one or more substantially cylindrical cavities such that a sealing material (e.g., glass-fiber reinforced polyester composite material, epoxy-based potting material, silicon-based potting material, etc.) and the at least one terminal may form a hermetic seal therein.

## Description

### FIELD OF THE INVENTION

Embodiments of the present disclosure generally relate to hermetically sealed sensing devices and methods for fabrication thereof.

### BACKGROUND

A hermetically sealed enclosure is configured to prevent gas and/or moisture from entering a predetermined region. There are many types of hermetically sealed enclosures and devices comprising hermetically sealed enclosures. Fabricating hermetically sealed enclosures, however, may present some challenges. In some examples, cracking and/or other types of damage to a sealing joint of a hermetically sealed enclosure may be undesirable. Applicant has identified many technical challenges and difficulties associated with such hermetically sealed devices and methods for fabrication thereof. Through applied effort, ingenuity, and innovation, many of these identified problems have been solved by developing solutions that are included in embodiments of the present disclosure, many examples of which are described in detail herein.

### BRIEF SUMMARY

Various example embodiments described herein relate to hermetically sealed sensing devices and methods for fabrication thereof.

In accordance with various embodiments of the present disclosure, an apparatus is provided. In some examples, the apparatus comprises: a header defining one or more substantially cylindrical cavities; at least one terminal within the one or more substantially cylindrical cavities, the at least one terminal having a texture; at least one sealing material disposed such that it surrounds the at least one terminal within the one or more substantially cylindrical cavities, the at least one sealing material having the form of a stopper and having at least one entry region feature and at least one exit region feature, wherein the at least one sealing material and the at least one terminal are press fit into the header; and at least one sensing element wire-bonded to the at least one terminal.

In some embodiments, the at least one terminal is comprised of brass.

In some embodiments, the at least one sealing material is silicon rubber.

In some embodiments, the at least one entry region feature is a flap configured to prevent the at least one sealing material from becoming displaced in an entry direction.

In some embodiments, the at least one exit region feature is a flap configured to prevent the at least one sealing material from becoming displaced in an exit direction.

In some embodiments, the header is comprised of stainless steel (SS316).

In some embodiments, the at least one sealing material and the at least one terminal being press fit into the header is configured to achieve a hermetic seal.

In accordance with various embodiments of the present disclosure, an apparatus is provided. In some embodiments, the apparatus comprises: a header defining one or more threaded grooves along one or more substantially cylindrical cavities; at least one terminal within the one or more substantially cylindrical cavities; at least one grommet surrounding the at least one terminal at an entry end of the one or more substantially cylindrical cavities; at least one sealing material disposed such that it surrounds the at least one terminal and filling the one or more threaded grooves and the one or more substantially cylindrical cavities; and at least one sensing element wire-bonded to the at least one terminal.

In some embodiments, the at least one sealing material is at least one of: a glass-fiber reinforced polyester composite material; an epoxy-based potting material; or a silicon-based potting material.

In some embodiments, the glass-fiber reinforced polyester composite material is at least one of: sheet molding compound (SMC); or bulk molding compound (BMC).

In some embodiments, the at least one terminal is comprised of brass.

In some embodiments, the header is comprised of stainless steel (SS316).

In some embodiments, the grommet is comprised of silicon rubber.

In some embodiments, the at least one cured sealing material, the grommet, and the at least one terminal are configured to achieve a hermetic seal with the header.

In accordance with various embodiments of the present disclosure, a method is provided. In some embodiments, the method comprises: configuring a header with one or more threaded grooves along one or more substantially cylindrical cavities defined by the header; inserting a silicon rubber grommet into at least one of the one or more substantially cylindrical cavities such that the silicon rubber grommet is proximate to one end of the at least one of the one or more substantially cylindrical cavities; inserting at least one terminal into the at least one of the one or more substantially cylindrical cavities such that the at least one terminal is at least partially within a substantially centered cavity defined by the silicon rubber grommet; dispensing a sealing material into the one or more threaded grooves along the one or more substantially cylindrical cavities; and curing the sealing material such that it forms a hermetic seal with the header.

In some embodiments, the sealing material is at least one of: a glass-fiber reinforced polyester composite material; an epoxy-based potting material; or a silicon-based potting material.

In some embodiments, the glass-fiber reinforced polyester composite material is at least one of: sheet molding compound (SMC); or bulk molding compound (BMC).

In some embodiments, the one end is an entry end of the at least one of the one or more substantially cylindrical cavities.

In some embodiments, the at least one terminal is comprised of brass.

In some embodiments, the header is comprised of stainless steel (SS316).

### BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:
FIG. 1 is a cross-sectional view of an exemplary hermetically sealed device;
FIGS. 2A-2C are perspective and cross-sectional views of steps for fabricating the exemplary hermetically sealed device of FIG. 1;
FIG. 3 is a flowchart illustrating an exemplary method for fabricating the hermetically sealed device of FIG. 1;
FIG. 4 is a cross-sectional view of an exemplary hermetically sealed device;
FIG. 5 is a flowchart illustrating an exemplary method for fabricating the hermetically sealed device of FIG. 4;
FIG. 6 is a cross-sectional view of an exemplary hermetically sealed device; and
FIG. 7 is a flowchart illustrating an exemplary method for fabricating the hermetically sealed device of FIG. 6, in accordance with some embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," "bottom," "left," "right," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The phrases "in one example," "according to one example," "in some examples," and the like generally mean that the particular feature, structure, or characteristic following the phrase may be included in at least one example of the present disclosure and may be included in more than one example of the present disclosure (importantly, such phrases do not necessarily refer to the same example).

If the specification states a component or feature "may," "can," "could," "should," "would," "preferably," "possibly," "typically," "optionally," "for example," "as an example," "in some examples," "often," or "might" (or other such language) be included or have a characteristic, that specific component or feature is not required to be included or to have the characteristic. Such component or feature may be optionally included in some examples, or it may be excluded.

The word "example" or "exemplary" is used herein to mean "serving as an example, instance, or illustration." Any implementation described herein as "example" or "exemplary" is not necessarily to be construed as preferred or advantageous over other implementations.

The term "electrically coupled," "electrically coupling," "electrically couple," "electrically connected," "electrically connecting," "electrically connect," "in communication with," or "in electronic communication with" in the present disclosure refers to two or more elements or components being connected through wired means and/or wireless means, such that signals, electrical voltage/current, data and/or information may be transmitted to and/or received from these elements or components.

The term "in fluid communication with" in the present disclosure refers to two or more elements or components being connected through one or more paths or pathways, such that a fluid or other flowing media may be input to and/or output from these elements or components.

The term "component" may refer to an article, a device, or an apparatus that may comprise one or more surfaces, portions, layers and/or elements. For example, an example component may comprise one or more substrates that may provide underlying layer(s) for the component and may comprise one or more elements that may form part of and/or are disposed on top of the substrate. In the present disclosure, the term "element" may refer to an article, a device, or an apparatus that may provide one or more functionalities.

The term "sensor" refers to a component that may detect, measure, and/or identify any one or more attributes or characteristics of an environment or media, including but not limited to force(s) and/or pressure(s).

Hermetically sealed enclosures of sensing devices may be configured to prevent gas and/or moisture from reaching sensing elements of the sensing devices. Hermetically sealed sensing devices may be configured to measure pressures and/or forces of various media in a variety of applications, for example, heating, ventilation, and air conditioning (HVAC) applications, industrial applications, medical applications, aerospace applications, and/or other applications.

In some examples, fabrication of hermetically sealed sensing devices, hermetically sealed enclosures, and/or hermetically sealed devices is limited by various factors including imperfections in the hermetic seal. For example, some hermetically sealed devices comprise a combination of metal and glass to achieve a hermetic seal. In such examples, molten glass may be dispensed into a cavity of a header. In these examples, successful fabrication of a hermetic seal relies on, in some examples, avoiding bubbles, cracks, and/or other imperfections in the glass, as any imperfection can allow gas and/or moisture to reach an enclosed region. In some examples, glass-to-metal hermetic sealing may be time-consuming and tedious and result in an undesirable waste of raw materials.

Embodiments of the present disclosure, in some examples, provide hermetically sealed sensing devices. Embodiments of the present disclosure, in some examples, provide methods for fabricating hermetically sealed devices.

Example embodiments of the hermetically sealed sensing devices described herein may include a header (e.g., comprised of stainless steel (SS316) and/or other materials) defining one or more substantially cylindrical cavities, at least one terminal (e.g., comprised of brass and/or other materials), a silicon rubber stopper molded to surround the at least one terminal and fill at least a portion of one or more cavities defied by the header, a sensing element, and/or wire-bonds coupling the sensing element to the at least one terminal. In some examples, the silicon rubber stopper comprises at least one entry region feature (e.g., a flap, stop, etc.) and at least one exit region feature (e.g., a flap, stop, etc.) configured to prevent displacement of the silicon rubber stopper.

Example embodiments of the methods described herein may include adding texture to a surface of at least one terminal, molding a silicon rubber stopper surrounding the at least one terminal such that the silicon rubber stopper comprises at least one entry region feature and at least one exit region feature, and/or press fitting an assembly comprising the at least one textured terminal and the silicon rubber stopper into a one or more substantially cylindrical cavities defined by a header.

Example embodiments of the hermetically sealed sensing devices described herein may include a header (e.g., comprised of stainless steel (SS316) and/or other materials) defining one or more substantially cylindrical cavities, one or more threaded grooves along the one or more substantially cylindrical cavities, at least one silicon rubber grommet configured to prevent sealing material from leaking (e.g., at least one silicon rubber grommet for each of the one or more substantially cylindrical cavities), at least one terminal (e.g., comprised of brass and/or other materials), a sealing material comprised of a glass-fiber reinforced polyester composite material (e.g., a sheet molding compound (SMC) and/or a bulk molding compound (BMC)), a sensing element, and/or wire-bonds coupling the sensing element to the at least one terminal.

Example embodiments of the methods described herein may include configuring a header with one or more threaded grooves along one or more substantially cylindrical cavities defined by the header, inserting a silicon rubber grommet into the one or more substantially cylindrical cavities such that the silicon rubber grommet is proximate to an end of the header, insert at least one terminal into at least one of the one or more substantially cylindrical cavities such that the at least one terminal is at least partially within a cavity defined by the silicon rubber grommet, dispensing a glass-fiber reinforced polyester composite material into the one or more threaded grooves along the one or more substantially cylindrical cavities, and/or curing the sealing material such that it forms a hermetic seal with the header.

Example embodiments of the hermetically sealed sensing devices described herein may include a header (e.g., comprised of stainless steel (SS316) and/or other materials) defining one or more substantially cylindrical cavities, one or more threaded grooves along the one or more substantially cylindrical cavities, at least one silicon rubber grommet configured to prevent sealing material from leaking, at least one terminal (e.g., comprised of brass and/or other materials), a sealing material comprised of an epoxy-based potting material and/or a silicon-based potting material, a sensing element, and/or wire-bonds coupling the sensing element to the at least one terminal.

Example embodiments of the methods described herein may include configuring a header with one or more threaded grooves along one or more substantially cylindrical cavities defined by the header, inserting a silicon rubber grommet into the one or more substantially cylindrical cavities such that the silicon rubber grommet is proximate to an end of the header, insert at least one terminal into at least one of the one or more substantially cylindrical cavities such that the at least one terminal is at least partially within a cavity defined by the silicon rubber grommet, dispensing a an epoxy-based potting material and/or a silicon-based potting material into the one or more threaded grooves along the one or more substantially cylindrical cavities, and/or curing the sealing material such that it forms a hermetic seal with the header.

As described herein, embodiments of the present disclosure, in some examples, provide methods, devices, and/or systems comprising hermetically sealed sensing devices, hermetically sealed enclosures, and/or hermetically sealed devices.

To address challenges and limitations associated with hermetically sealed sensing devices and methods for fabrication thereof, various examples of the present disclosure may be provided. For example, various examples of the present disclosure may provide example devices, systems, and/or methods for hermetically sealed enclosures and/or fabrication thereof.

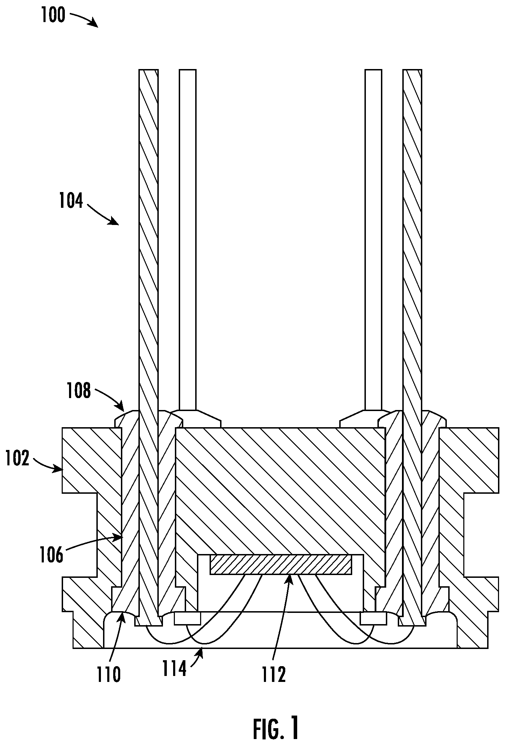

Referring now to FIG. 1, a cross-sectional view of an exemplary hermetically sealed device 100 is provided. The device 100 includes a header 102, at least one terminal 104, a silicon rubber stopper 106 having at least one entry region feature 108 and at least one exit region feature 110, a sensing element 112, and/or wire-bonds 114. The device 100 may comprise a hermetic seal between the silicon rubber stopper 106 and the header 102. The hermetic seal may be configured to prevent gas, moisture, and/or other contaminants from reaching, for example, the sensing element 112.

The header 102 may be comprised of stainless steel, for example, such as SS316, and/or other materials. The header 102 may define one or more substantially cylindrical cavities. The one or more substantially cylindrical cavities may have smooth (e.g., substantially smooth) inner walls. In some examples, the one or more substantially cylindrical cavities may be substantially parallel to an axis of the header 102. The one or more substantially cylindrical cavities may be configured to house the at least one terminal 104 and the silicon rubber stopper 106.

The at least one terminal 104 may be comprised of brass and/or other materials. In some examples, the at least one terminal 104 may be an elongated metal structure with one flared (e.g., wide) end. The at least one terminal 104 may be configured to couple to the sensing element 112 via the wire-bonds 114. The at least one terminal 104 may be configured to form a hermetic seal, along with the silicon rubber stopper 106 and the one or more substantially cylindrical cavities. For example, the hermetic seal may be achieved within the one or more substantially cylindrical cavities by the at least one terminal 104 and the silicon rubber stopper 106.

The silicon rubber stopper may comprise at least one entry region feature 108 and at least one exit region feature 110. In some examples, the at least one entry region feature 108 may be a flap, a protruding edge, a flared end, and/or other configurations. The at least one entry region feature 108 may be convex. In some examples, the at least one exit region feature 110 may be a flap, a protruding edge, a flared end, and/or other configurations. The at least one exit region feature 110 may be flat. Together, the at least one entry region feature 108 and the at least one exit region feature 110 may be configured to prevent the silicon rubber stopper 106 from becoming displaced by providing mechanical stops at each end of the one or more substantially cylindrical cavities. The silicon rubber stopper 106 may be configured to form a hermetic seal along with the at least one terminal 104 and the one or more substantially cylindrical cavities. For example, the hermetic seal may be achieved within the one or more substantially cylindrical cavities by the silicon rubber stopper 106 and the at least one terminal 104.

The sensing element 112 may be a force sensing element. The sensing element 112 may be pressure sensing element. In some examples, the sensing element 112 may be a sense die. The sensing element 112 may be coupled to the header via an adhesive material. The wire-bonds 114 may couple the sensing element 112 to the at least one terminal 104.

The hermetically sealed device 100 may be useful for applications at temperatures up to up to and including 150 degrees Celsius, for example, such as automotive applications, aviation applications, aerospace applications, defense applications, and/or other applications.

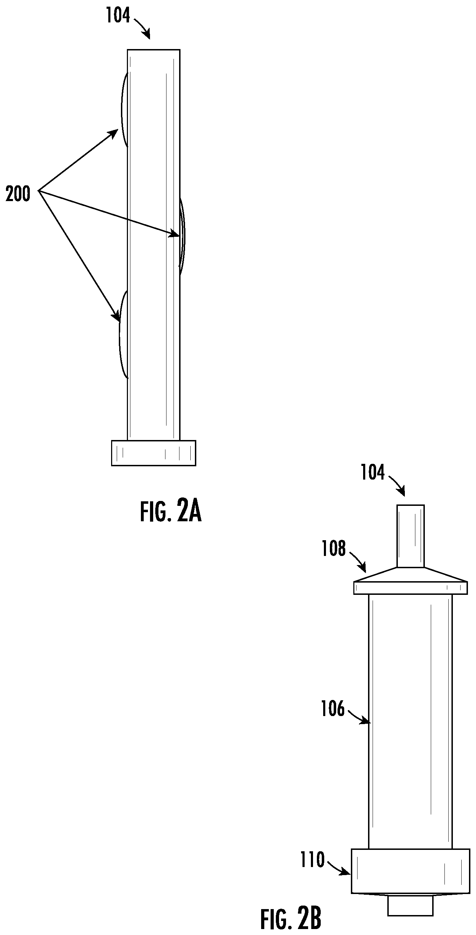

FIGS. 2A-2C are perspective and cross-sectional views of steps for fabricating the exemplary hermetically sealed device of FIG. 1. Referring now to FIG. 2A, a perspective view of a terminal is provided. The terminal may be the at least one terminal 104. At the step/operation depicted in FIG. 2A, the at least one terminal 104 may become textured. For example, the at least one terminal 104 may be scratched, abraded, gnarled, and/or otherwise textured such that its surface is no longer smooth (or substantially smooth). Advantages of texturing the at least one terminal 104 may include, for example, allowing the terminal to make better contact with the silicon rubber stopper 106 (e.g., due to additional crevices in which the silicon rubber material may enter, due to additional friction between the silicon rubber and the metal of the terminal, etc.).

Referring now to FIG. 2B, a perspective view of molding a silicon rubber stopper around the terminal is provided. The silicon rubber stopper may be the silicon rubber stopper 106. Silicon rubber material may be molded around the at least one terminal 104. The silicon rubber material may be shaped into the silicon rubber stopper 106, for example, via a mold. In some examples, once the silicon rubber material is molded into the shape of the silicon rubber stopper 106, the at least one terminal may be inserted into a cavity defined by the silicon rubber stopper 106. The silicon rubber stopper 106 may be molded such that it comprises at least one entry region feature (e.g., the at least one entry region feature 108) and at least one exit region feature (e.g., the at least one exit region feature 110). The features 108 and 110 may be configured to act as mechanical stops such that the silicon rubber stopper 106 is prevented from becoming displaced from its position within the one or more substantially cylindrical cavities defined by the header 102.

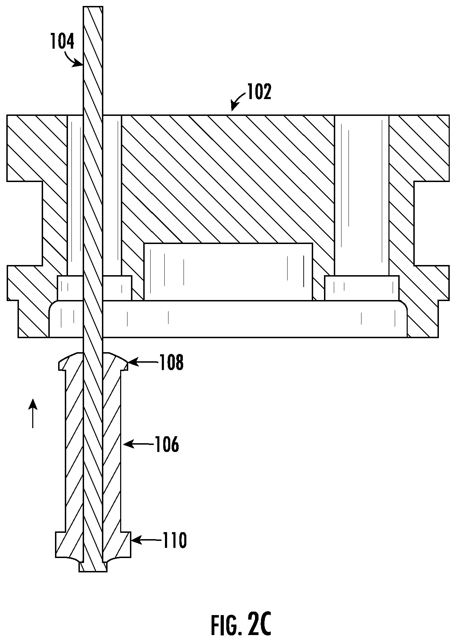

Referring now to FIG. 2C, a cross-sectional view of inserting an assembly comprising the rubber stopper and the terminal into a header is provided. The header may be the header 102. The assembly may be inserted into the header 102 (e.g., into the one or more substantially cylindrical cavities defined by the header 102). In some examples, the assembly may be inserted into the header 102 by hand. For example, a user may insert the assembly into the header 102. The assembly may be inserted into the header 102 such that the at least one entry region feature 108 may protrude past a surface of the header 102 and the at least one exit region feature 110 may protrude past the opposite surface of the header 102. Once the assembly is inserted into the header 102, a hermetic seal may be achieved between the assembly and the header 102. Advantages of the hermetic seal include protecting the sensing element 112 from gas, moisture, and/or any other contaminant.

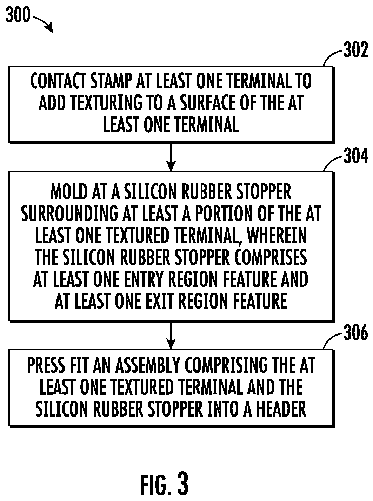

Referring now to FIG. 3, a flowchart illustrating an exemplary method 300 for fabricating the hermetically sealed device of FIG. 1 is provided.

At step/operation 302, at least one terminal may be contact stamped to add texturing to a surface of the at least one terminal. In some examples, the at least one terminal may be the at least one terminal 104. The contact stamping may be performed by an apparatus suitable to the application, by hand, and/or the like. The surface of the at least one terminal 104 may refer to a region defined by a surface area of a non-flared, substantially cylindrical portion of the at least one terminal 104.

At step/operation 304, a silicon rubber stopper may be molded such that the silicon rubber stopper surrounds at least a portion of the at least one textured terminal. The silicon rubber stopper may comprise at least one entry region feature and at least one exit region feature. In some examples, the silicon rubber stopper may be the silicon rubber stopper 106, wherein the at least one entry region feature may be the at least one entry region feature 108 and the at least one exit region feature may be the at least one exit region feature may be the at least one exit region feature 110. The silicon rubber stopper 106 may be molded around at least a portion of the at least one textured terminal 104 by hand, via a mold, and/or via other methods.

At step/operation 306, an assembly comprising the at least one textured terminal and the silicon rubber stopper may be press fit into a header. In some examples, the header may be the header 102. The assembly may be press fit into one or more substantially cylindrical cavities of the header 102. The assembly may be press fit into the header 102 (e.g., into the one or more substantially cylindrical cavities of the header 102) by hand, by an apparatus suitable for the application, and/or via other methods.

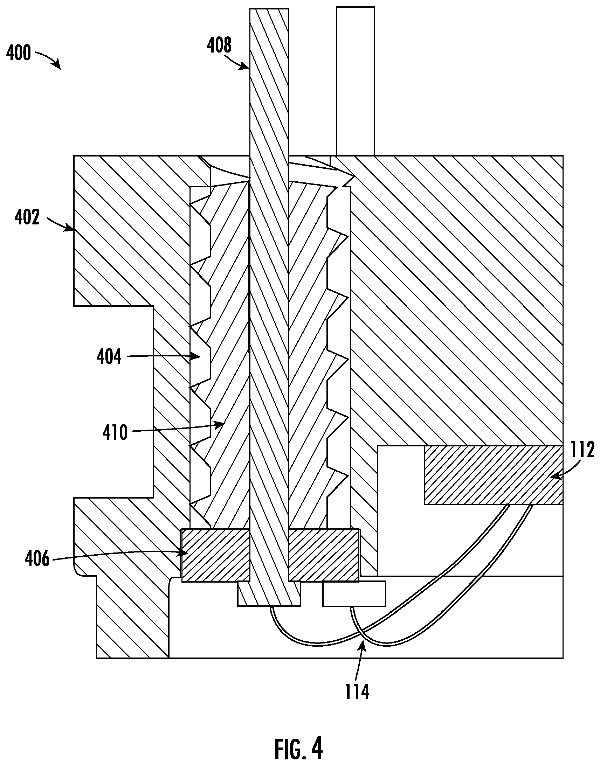

Referring now to FIG. 4, a cross-sectional view of an exemplary hermetically sealed device 400 is provided. The device 400 includes a header 402, one or more threaded grooves 404 along one or more substantially cylindrical cavities defined by the header 402, a silicon rubber grommet 406, at least one terminal 408, a glass-fiber reinforced polyester material 410, a sensing element 112, and/or wire-bonds 114. The device 400 may comprise a hermetic seal between the glass-fiber reinforced polyester material 410 and the header 402. The hermetic seal may be configured to prevent gas, moisture, and/or other contaminants from reaching, for example, the sensing element 112.

The header 402 may be comprised of stainless steel, for example, such as SS316, and/or other materials. The header 402 may define one or more substantially cylindrical cavities. The header 402 may define the one or more substantially cylindrical cavities. In some examples, the one or more threaded grooves 404 may be disposed along inner walls of the one or more substantially cylindrical cavities. For example, the inner walls may be surfaces of the one or more substantially cylindrical cavities which will come into contact with the glass-fiber reinforced polyester material 410. The threaded grooves 404 may be configured to provide increased surface area for contact with the glass-fiber reinforced polyester material 410. In some examples, the one or more substantially cylindrical cavities may be substantially parallel to an axis of the header 402. The one or more substantially cylindrical cavities may be configured to house the at least one terminal 408 and the glass-fiber reinforced polyester material 410.

The silicon rubber grommet 406 may be comprised of a silicon rubber material. The silicon rubber grommet 406 may be configured to act as a stopper, for example, such that the glass-fiber reinforced polyester material 410, when dispensed into the one or more substantially cylindrical cavities, may not leak out of the header 402. The silicon rubber grommet 406 may define a hole at approximately its center through which the at least one terminal 408 may be disposed (e.g., once the device 400 is assembled).

The at least one terminal 408 may be comprised of brass and/or other materials. In some examples, the at least one terminal 408 may be an elongated metal structure with one flared (e.g., wide) end. The at least one terminal 408 may be configured to couple to the sensing element 112 via the wire-bonds 114. The at least one terminal 408 may be configured to form a hermetic seal, along with the glass-reinforced polyester material 410 and the one or more substantially cylindrical cavities. For example, the hermetic seal may be achieved within the one or more substantially cylindrical cavities by the at least one terminal 408 and the glass-reinforced polyester material 410.

The glass-reinforced polyester material 410 may be a sheet molding compound (SMC), in some examples. The glass-reinforced polyester material 410 may be a bulk molding compound (BMC), in some examples. During fabrication of the device 400, the glass-reinforced polyester material 410 may be dispensed (e.g., in a liquid form) into the one or more substantially cylindrical cavities having the one or more threaded grooves 404 defined by the header 402. The silicon rubber grommet 406 may act as a stopper such that the liquid glass-reinforced polyester material 410 does not leak out of the header 402 while in a liquid form. In some examples, the glass-reinforced polyester material 410 may be cured at room temperature. In some examples, the glass-reinforced polyester material 410 may be cured at operating temperature(s) (e.g., temperature(s) at which the assembled device 400 may be used). The glass-reinforced polyester material 410 may have a coefficient of thermal expansion of approximately 17.78% of degrees Celsius (e.g., of the current temperature in degrees Celsius).

The hermetically sealed device 400 may be useful for applications at temperatures greater than and including 150 degrees Celsius, for example, such as automotive applications, appliance applications, electrical applications, construction applications, and/or other applications.

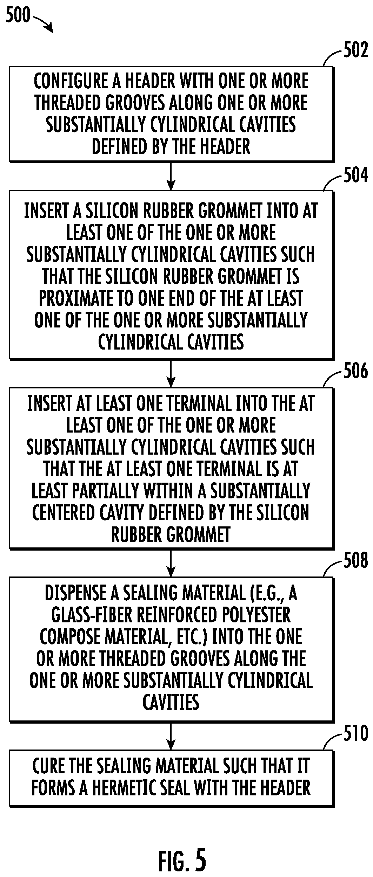

Referring now to FIG. 5, a flowchart illustrating an exemplary method 500 for fabricating the hermetically sealed device of FIG. 4 is provided.

At step/operation 502, a header may be configured with one or more threaded grooves along one or more substantially cylindrical cavities defined by the header. In some examples, the header may be the header 402. In some examples, the one or more threaded grooves may be the one or more threaded grooves 404. The one or more threaded grooves 404 may be defined via drilling and/or other methods.

At step/operation 504, at least one silicon rubber grommet may be inserted into at least one of the one or more substantially cylindrical cavities. The silicon rubber grommet may be proximate to one end of the at least one of the one or more substantially cylindrical cavities. The at least one silicon rubber grommet may be the silicon rubber grommet 406. The silicon rubber grommet 406 may be inserted by hand and/or via other methods.

At step/operation 506, at least one terminal may be inserted into the at least one of the one or more substantially cylindrical cavities such that the at least one terminal is at least partially within a substantially cylindrical cavity defined by the at least one silicon rubber grommet. In some examples, the at least one terminal may be the at least one terminal 408. The at least one terminal 408 may be inserted into the at least one of the one or more substantially centered cavities through a hole (e.g., cavity) defined by the silicon rubber grommet 406. The cavity defined by the silicon rubber grommet 406 may be approximately concentric with the at least one of the one or more substantially cylindrical cavities.

At step/operation 508, a sealing material may be dispensed into the one or more threaded grooves along the one or more substantially cylindrical cavities. For example, the sealing material may be dispensed into the one or more substantially cylindrical cavities such that it also fills the one or more threaded grooves. In some examples, the sealing material may be the glass-fiber reinforced polyester material 410 (e.g., SMC, BMC, and/or the like). In some examples, the one or more threaded grooves may be the one or more threaded grooves 404.

At step/operation 510, the sealing material may be cured such that it forms a hermetic seal with the header. In some examples, the sealing material may be the glass-fiber reinforced polyester material 410 (e.g., SMC, BMC, and/or the like). In some examples, the header may be the header 402. In some examples, the at least one terminal 408 and the glass-fiber reinforced polyester material 410 may form a hermetic seal with the header 402.

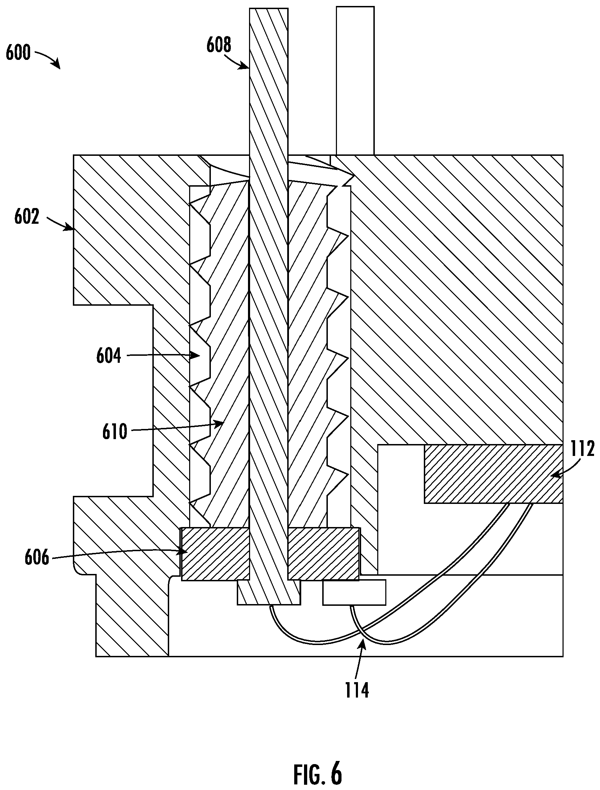

Referring now to FIG. 6, a cross-sectional view of an exemplary hermetically sealed device 600 is provided. The device 600 includes a header 602, one or more threaded grooves 604 along one or more substantially cylindrical cavities defined by the header 602, a silicon rubber grommet 606, at least one terminal 608, a potting material 610 (e.g., an epoxy-based potting material, a silicon-based potting material, and/or the like), a sensing element 112, and/or wire-bonds 114. The device 600 may comprise a hermetic seal between the potting material 610 and the header 602. The hermetic seal may be configured to prevent gas, moisture, and/or other contaminants from reaching, for example, the sensing element 112.

The header 602 may be comprised of stainless steel, for example, such as SS316, and/or other materials. The header 602 may define one or more substantially cylindrical cavities. The header 602 may define the one or more substantially cylindrical cavities. In some examples, the one or more threaded grooves 604 may be disposed along inner walls of the one or more substantially cylindrical cavities. For example, the inner walls may be surfaces of the one or more substantially cylindrical cavities which will come into contact with the potting material 610. The threaded grooves 604 may be configured to provide increased surface area for contact with the glass-fiber reinforced polyester material 610. In some examples, the one or more substantially cylindrical cavities may be substantially parallel to an axis of the header 602. The one or more substantially cylindrical cavities may be configured to house the at least one terminal 608 and the potting material 610.

The silicon rubber grommet 606 may be comprised of a silicon rubber material. The silicon rubber grommet 606 may be configured to act as a stopper, for example, such that potting material 610, when dispensed into the one or more substantially cylindrical cavities, may not leak out of the header 602. The silicon rubber grommet 606 may define a hole at approximately its center through which the at least one terminal 608 may be disposed (e.g., once the device 600 is assembled).

The at least one terminal 608 may be comprised of brass and/or other materials. In some examples, the at least one terminal 608 may be an elongated metal structure with one flared (e.g., wide) end. The at least one terminal 608 may be configured to couple to the sensing element 112 via the wire-bonds 114. The at least one terminal 608 may be configured to form a hermetic seal, along with the potting material 610 and the one or more substantially cylindrical cavities. For example, the hermetic seal may be achieved within the one or more substantially cylindrical cavities by the at least one terminal 608 and the potting material 610.

The potting material 610 may be an epoxy-based potting material, in some examples. The potting material 610 may be a silicon-based potting material, in some examples. During fabrication of the device 600, the potting material 610 may be dispensed (e.g., in a liquid form) into the one or more substantially cylindrical cavities having the one or more threaded grooves 604 defined by the header 602. The silicon rubber grommet 606 may act as a stopper such that the liquid potting material does not leak out of the header 602 while in a liquid form. In some examples, the potting material 610 may be cured at room temperature. In some examples, the potting material 610 may be cured at operating temperature(s) (e.g., temperature(s) at which the assembled device 600 may be used). In some examples, the potting material 610 may be cured at a temperature above room temperature for a predetermined amount of time.

The hermetically sealed device 600 may be useful for applications at temperatures greater than and including 150 degrees Celsius (e.g., up to and including approximately 180 degrees Celsius), for example, such as automotive applications, defense applications, aerospace applications, military applications.

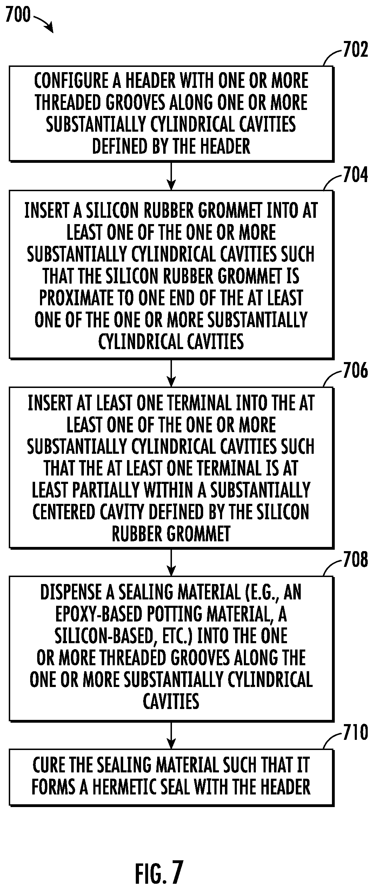

Referring now to FIG. 7, a flowchart illustrating an exemplary method for fabricating the hermetically sealed device of FIG. 6 is provided.

At step/operation 702, a header may be configured with one or more threaded grooves along one or more substantially cylindrical cavities defined by the header. In some examples, the header may be the header 602. In some examples, the one or more threaded grooves may be the one or more threaded grooves 604. The one or more threaded grooves 604 may be defined via drilling and/or other methods.

At step/operation 704, at least one silicon rubber grommet may be inserted into at least one of the one or more substantially cylindrical cavities. The silicon rubber grommet may be proximate to one end of the at least one of the one or more substantially cylindrical cavities. The at least one silicon rubber grommet may be the silicon rubber grommet 606. The silicon rubber grommet 606 may be inserted by hand and/or via other methods.

At step/operation 706, at least one terminal may be inserted into the at least one of the one or more substantially cylindrical cavities such that the at least one terminal is at least partially within a substantially cylindrical cavity defined by the at least one silicon rubber grommet. In some examples, the at least one terminal may be the at least one terminal 608. The at least one terminal 608 may be inserted into the at least one of the one or more substantially centered cavities through a hole (e.g., cavity) defined by the silicon rubber grommet 606. The cavity defined by the silicon rubber grommet 606 may be approximately concentric with the at least one of the one or more substantially cylindrical cavities.

At step/operation 708, a potting material may be dispensed into the one or more threaded grooves along the one or more substantially cylindrical cavities. For example, the potting material may be dispensed into the one or more substantially cylindrical cavities such that it also fills the one or more threaded grooves. In some examples, the potting material may be the potting material 610 (e.g., an epoxy-based potting material, a silicon-based potting material, and/or the like). In some examples, the one or more threaded grooves may be the one or more threaded grooves 604.

At step/operation 710, the potting material may be cured such that it forms a hermetic seal with the header. In some examples, the sealing material may be the potting material 610 (e.g., an epoxy-based potting material, a silicon-based potting material, and/or the like). In some examples, the header may be the header 602. In some examples, the at least one terminal 608 and the glass-fiber reinforced polyester material 610 may form a hermetic seal with the header 602.

Advantages of the devices and methods described herein include simplifying achieving hermetic seals.

Operations and processes described herein support combinations of means for performing the specified functions and combinations of operations for performing the specified functions. It will be understood that one or more operations, and combinations of operations, may be implemented by special purpose hardware-based computer systems which perform the specified functions, or combinations of special purpose hardware and computer instructions.

In some example embodiments, certain ones of the operations herein may be modified or further amplified as described below. Moreover, in some embodiments additional optional operations may also be included. It should be appreciated that each of the modifications, optional additions or amplifications described herein may be included with the operations herein either alone or in combination with any others among the features described herein.

The foregoing method and process descriptions are provided merely as illustrative examples and are not intended to require or imply that the steps of the various embodiments must be performed in the order presented. As will be appreciated by one of skill in the art the order of steps in the foregoing embodiments may be performed in any order. Words such as "thereafter," "then," "next," and similar words are not intended to limit the order of the steps; these words are simply used to guide the reader through the description of the methods. Further, any reference to claim elements in the singular, for example, using the articles "a," "an" or "the," is not to be construed as limiting the element to the singular and may, in some instances, be construed in the plural.

While various embodiments in accordance with the principles disclosed herein have been shown and described above, modifications thereof may be made by one skilled in the art without departing from the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above, but is defined by the claims which follow, that scope including all equivalents of the subject matter of the claims. Each and every claim is incorporated as further disclosure into the specification and the claims are embodiment(s) of the present disclosure. Furthermore, any advantages and features described above may relate to specific embodiments but shall not limit the application of such issued claims to processes and structures accomplishing any or all of the above advantages or having any or all of the above features.

In addition, the section headings used herein are provided for consistency with the suggestions under 37 C.F.R. § 1.77 or to otherwise provide organizational cues. These headings shall not limit or characterize the disclosure set out in any claims that may issue from this disclosure. For instance, a description of a technology in the "Background" is not to be construed as an admission that certain technology is prior art to any disclosure in this disclosure. Neither is the "Summary" to be considered as a limiting characterization of the disclosure set forth in issued claims. Furthermore, any reference in this disclosure to "disclosure" or "embodiment" in the singular should not be used to argue that there is only a single point of novelty in this disclosure. Multiple embodiments of the present disclosure may be set forth according to the limitations of the multiple claims issuing from this disclosure, and such claims accordingly define the disclosure, and their equivalents, which are protected thereby. In all instances, the scope of the claims shall be considered on their own merits in light of this disclosure but should not be constrained by the headings set forth herein.

Also, systems, subsystems, apparatuses, techniques, and methods described and illustrated in the various embodiments as discrete or separate may be combined or integrated with other systems, modules, techniques, or methods without departing from the scope of the present disclosure. Other devices or components shown or discussed as coupled to, or in communication with, each other may be indirectly coupled through some intermediate device or component, whether electrically, mechanically, or otherwise. Other examples of changes, substitutions, and alterations are ascertainable by one skilled in the art and could be made without departing from the scope disclosed herein.

Many modifications and other embodiments of the disclosure set forth herein will come to mind to one skilled in the art to which these embodiments pertain having the benefit of teachings presented in the foregoing descriptions and the associated figures. Although the figures only show certain components of the apparatuses and systems described herein, various other components may be used in conjunction with the components and structures disclosed herein. Therefore, it is to be understood that the disclosure is not to be limited to the specific embodiments disclosed and that modifications and other embodiments are intended to be included within the scope of the appended claims. For example, the various elements or components may be combined, rearranged, or integrated in another system or certain features may be omitted or not implemented. Moreover, the steps in any method described above may not necessarily occur in the order depicted in the accompanying drawings, and in some cases one or more of the steps depicted may occur substantially simultaneously, or additional steps may be involved. Although specific terms are employed herein, they are used in a generic and descriptive sense only and not for purposes of limitation.

## Claims

1. An apparatus comprising:
a header defining one or more substantially cylindrical cavities;
at least one terminal within the one or more substantially cylindrical cavities, the at least one terminal having a texture;
at least one sealing material disposed such that it surrounds the at least one terminal within the one or more substantially cylindrical cavities, the at least one sealing material having the form of a stopper and having at least one entry region feature and at least one exit region feature, wherein the at least one sealing material and the at least one terminal are press fit into the header; and
at least one sensing element wire-bonded to the at least one terminal.

2. The apparatus of claim 1, wherein the at least one terminal is comprised of brass.

3. The apparatus of any of claims 1 or 2, wherein the at least one sealing material is silicon rubber.

4. The apparatus of any of claims 1 to 3, wherein the at least one entry region feature is a flap configured to prevent the at least one sealing material from becoming displaced in an entry direction.

5. The apparatus of any of claims 1 to 4, wherein the at least one exit region feature is a flap configured to prevent the at least one sealing material from becoming displaced in an exit direction.

6. The apparatus of any of claims 1 to 5, wherein the header is comprised of stainless steel (SS316).

7. The apparatus of any of claims 1 to 6, wherein the at least one sealing material and the at least one terminal being press fit into the header is configured to achieve a hermetic seal.

8. An apparatus comprising:
a header defining one or more threaded grooves along one or more substantially cylindrical cavities;
at least one terminal within the one or more substantially cylindrical cavities;
at least one grommet surrounding the at least one terminal at an entry end of the one or more substantially cylindrical cavities;
at least one sealing material disposed such that it surrounds the at least one terminal and filling the one or more threaded grooves and the one or more substantially cylindrical cavities; and
at least one sensing element wire-bonded to the at least one terminal.

9. The apparatus of claim 8, wherein the at least one sealing material is at least one of:
a glass-fiber reinforced polyester composite material;
an epoxy-based potting material; or
a silicon-based potting material.

10. The apparatus of any of claims 8 or 9, wherein the glass-fiber reinforced polyester composite material is at least one of:
sheet molding compound (SMC); or
bulk molding compound (BMC).

11. The apparatus of any of claims 8 to 10, wherein the at least one terminal is comprised of brass.

12. The apparatus of any of claims 8 to 11, wherein the header is comprised of stainless steel (SS316).

13. The apparatus of any of claims 8 to 12, wherein the grommet is comprised of silicon rubber.

14. The apparatus of any of claims 8 to 13, wherein the at least one cured sealing material, the grommet, and the at least one terminal are configured to achieve a hermetic seal with the header.

15. A method comprising:
configuring a header with one or more threaded grooves along one or more substantially cylindrical cavities defined by the header;
inserting a silicon rubber grommet into at least one of the one or more substantially cylindrical cavities such that the silicon rubber grommet is proximate to one end of the at least one of the one or more substantially cylindrical cavities;
inserting at least one terminal into the at least one of the one or more substantially cylindrical cavities such that the at least one terminal is at least partially within a substantially centered cavity defined by the silicon rubber grommet;
dispensing a sealing material into the one or more threaded grooves along the one or more substantially cylindrical cavities; and
curing the sealing material such that it forms a hermetic seal with the header.
